(19) Europäisches Patentamt
European Patent Office
Office européen des brevets

(11) **EP 2 166 489 B1**

(12) **EUROPÄISCHE PATENTSCHRIFT**

(45) Veröffentlichungstag und Bekanntmachung des Hinweises auf die Patenterteilung:
**11.12.2013 Patentblatt 2013/50**

(51) Int Cl.:
*G06K 9/00* (2006.01)     *B60Q 1/08* (2006.01)

(21) Anmeldenummer: **09170872.7**

(22) Anmeldetag: **21.09.2009**

(54) **Verfahren und Vorrichtung zum Detektieren von Fahrzeugen bei Dunkelheit**

Method and device for detecting vehicles in the dark

Procédé et dispositif de détection de véhicules dans l'obscurité

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.09.2008 DE 102008048309**

(43) Veröffentlichungstag der Anmeldung:
**24.03.2010 Patentblatt 2010/12**

(73) Patentinhaber: **Volkswagen Aktiengesellschaft
38440 Wolfsburg (DE)**

(72) Erfinder:
- **López Rena, Antonio M.**
  **ES-08850, Gavà / Barcelona (ES)**
- **Busse, Andreas**
  **85051 Ingolstadt (DE)**
- **Hilgenstock, Jörg**
  **DE-38527, Meine (DE)**
- **Baldrich, Ramon**
  **ES-08192, Sant Quirze Delvalles/Barcelona (ES)**
- **Lumbreras Ruiz, Felipe**
  **ES-08027, Barcelona (ES)**
- **Serrat Gual, Joan**
  **ES-08420, Canovelles (Barcelona) (ES)**

(74) Vertreter: **Reitstötter - Kinzebach
Patentanwälte
Sternwartstrasse 4
81679 München (DE)**

(56) Entgegenhaltungen:
**EP-A2- 1 837 803    US-A1- 2004 143 380**

- **BAHIMANN C ET AL: "A system for traffic sign detection, tracking, and recognition using color, shape, and motion information" INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6. Juni 2005 (2005-06-06), Seiten 255-260, XP010834131 ISBN: 978-0-7803-8961-8**
- **GEPPERTH A ET AL: "Real-time detection and classification of cars .in video sequences" INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6. Juni 2005 (2005-06-06), Seiten 625-631, XP010833865 ISBN: 978-0-7803-8961-8**

**Beschreibung**

Die vorliegende Erfindung betrifft ein Verfahren zum Detektieren von Fahrzeugen bei Dunkelheit. Ferner betrifft die Erfindung ein Verfahren zum Steuern zumindest eines Scheinwerfers eines Fahrzeugs, wobei der Scheinwerfer verschiedene Einstellungen mit unterschiedlichen Leuchtweiten aufweist, bei dem nach dem Verfahren zum Detektieren von Fahrzeugen bei Dunkelheit andere Fahrzeuge im Verkehrsbereich vor dem Fahrzeug detektiert werden. Ferner betrifft die Erfindung eine Vorrichtung zum Detektieren von Fahrzeugen bei Dunkelheit mit einem Sensor zum Aufnehmen eines Bildes eines Verkehrsbereichs im sichtbaren Spektralbereich und einer Bildverarbeitungsvorrichtung, welche mit dem Sensor gekoppelt ist. Schließlich betrifft die Erfindung eine Vorrichtung zum Steuern zumindest eines Scheinwerfers eines Fahrzeugs, wobei der Scheinwerfer verschiedene Einstellungen mit unterschiedlichen Leuchtweiten aufweist, welche die Vorrichtung zum Detektieren von anderen Fahrzeugen bei Dunkelheit verwendet.

Um den Fahrer bei Dunkelheit früh genug vor Gefahren zu warnen, ist es erforderlich, dass er weit im voraus Verkehrszeichen, die Geometrie der Fahrbahn und andere Fahrzeuge erkennt. Entsprechend haben die Fahrzeugscheinwerfer die Aufgabe, den Verkehrsbereich vor dem Fahrzeug so gut wie möglich auszuleuchten. Üblicherweise umfassen die Scheinwerfer eine Abblendlichtfunktion und eine Fernlichtfunktion zwischen denen manuell vom Fahrer umgeschaltet wird. Bei der Fernlichtfunktion, die eine wesentlich größere Reichweite als die Abblendlichtfunktion hat, ergibt sich dabei jedoch das Problem, dass andere Verkehrsteilnehmer, insbesondere die Fahrer entgegenkommender oder vorausfahrender Fahrzeuge, von der Lichtemission geblendet werden. Es hat sich herausgestellt, dass aus diesem Grund das Fernlicht weniger als 25 % der Zeit benutzt wird, in der die Bedingungen eigentlich ihre Verwendung zulassen würden, da der Fahrer befürchtet, andere Verkehrsteilnehmer zu blenden. Es besteht daher ein Bedürfnis, ein Verfahren bereitzustellen, mit dem die Scheinwerfer automatisch so gesteuert werden können, dass einerseits eine möglichst gute Ausleuchtung des Verkehrsraums vor dem Fahrzeug erfolgt, gleichzeitig jedoch verhindert wird, dass andere Verkehrsteilnehmer geblendet werden.

Für ein solches Verfahren ist die Detektion von Fahrzeugen bei Dunkelheit ein wichtiger Teilschritt. Um zu vermeiden, andere Verkehrsteilnehmer zu blenden, müssen entgegenkommende Fahrzeuge bei Entfernungen von über 600 m und vorausfahrende Fahrzeuge bei Entfernungen von über 400 m vor dem eigenen Fahrzeug detektiert werden. Um die Kosten für die Detektion der Fahrzeuge bei Dunkelheit niedrig zu halten, sollten die verwendeten Einrichtungen nach Möglichkeit auch geeignet sein, von anderen Anwendungen im Fahrzeug wie z. B. einem Spurhalterassistenten oder einer Verkehrszeichenerkennung genutzt zu werden.

Die US 6,611,610 B1 beschreibt ein Verfahren zum automatischen Steuern der Scheinwerfer eines Fahrzeugs. Bei dem Verfahren wird ein Bildsensor verwendet, der ein Bild einer Szene aufnimmt und der Bildpunktwerte bereitstellt. Bei der Verarbeitung wird eine Gruppe zusammenhängender Bildpunkte identifiziert, die einer Lichtquelle zugeordnet werden können. In Abhängigkeit von Eigenschaften der Bildpunkte der Gruppe wird ein Steuersignal für den Scheinwerfer des Fahrzeugs erzeugt. Bei der Bildverarbeitung wird analysiert, ob es sich bei der Lichtquelle um das rote Rücklicht eines vorausfahrenden Fahrzeugs oder das Licht eines Scheinwerfers eines entgegenkommenden Fahrzeugs handelt. Eine Lichtquelle wird als Rücklicht klassifiziert, wenn das Verhältnis des Rotanteils zu dem Cyananteil ausreichend groß ist. Dabei wird der Schwellwert für den Rotanteil durch Vergleich mit einer zweidimensionalen Tabelle festgelegt.

In der US 2004/0143380 A1 wird ein Verfahren beschrieben, bei dem Bilder der Umgebung des Fahrzeugs verarbeitet werden und zur automatischen Steuerung der Fahrzeugscheinwerfer verwendet werden. Des Weiteren ist in der EP 1 837 803 A2 ein Verfahren beschrieben, mit dem Fahrzeugscheinwerfer, Rücklichter und Straßenbeleuchtungen detektiert werden können.

Es ist somit die Aufgabe der vorliegende Erfindung, ein Verfahren und eine Vorrichtung der eingangs genannten Art bereitzustellen, mit denen Fahrzeuge bei Dunkelheit auch in großen Entfernungen verlässlich detektiert werden können.

Diese Aufgabe wird durch ein Verfahren mit den Merkmalen des Anspruchs 1 sowie eine Vorrichtung mit den Merkmalen des Anspruchs 11 gelöst. Vorteilhafte Aus- und Weiterbildungen ergeben sich aus den abhängigen Ansprüchen.

Bei dem erfindungsgemäßen Verfahren wird ein Bild eines Verkehrsbereichs im sichtbaren Spektralbereich aufgenommen. Aus diesem Bild werden zusammenhängende Bereiche  mit einer Helligkeit extrahiert, die einen Schwellwert überschreitet. Danach werden die Bereiche zumindest in Abhängigkeit von ihrer Größe klassifiziert. Anschließend wird jedem Bereich ein Konfidenzwert, der ein Maß für die Ähnlichkeit des Bereichs des Bildes zu einem Fahrzeuglicht darstellt, aus der Klassifikation des Bereichs und einer physikalischen Größe, die dem Bereich zugeordnet ist, gebildet. In Abhängigkeit von dem Konfidenzwert wird bestimmt, ob ein Bereich einem Fahrzeuglicht zugeordnet wird.

Das erfindungsgemäße Verfahren berücksichtigt, dass sich helle Bereiche des Bildes, die von weit entfernten Lichtquellen stammen, von hellen Bereichen unterscheiden, die von nahen Lichtquellen stammen. An Hand dieser Unterscheidung werden die hellen Bereiche des Bildes klassifiziert. Da durch die Klassifikation jedoch in vielen Fällen keine eindeutige Zuordnung eines Bereichs zu einem Fahrzeuglicht möglich ist, wird anschließend zumindest für die Bereiche, die nicht eindeutig einem Fahrzeuglicht zugeordnet werden können, ein Konfidenzwert bestimmt. In Abhängigkeit von diesem Konfidenzwert kann sehr zuverlässig ermittelt werden, ob ein Bereich einem Fahrzeuglicht zugeordnet werden kann.

Bei dem erfindungsgemäßen Verfahren wird bei der Klassifikation der Bereiche ein Klassifikationswert aus Eigenschaften des Bereichs gewonnen. Dieser Klassifikationswert wird jedem Bereich zugeordnet und der Konfidenzwert wird aus dem Klassifikationswert des Bereichs und der physikalischen Größe gebildet. Der Klassifikationswert beschreibt wie gut bzw. eindeutig sich der Bereich der jeweiligen Klasse bei der Klassifikation zuordnen lässt. Der Klassifikationswert gibt somit eine Unterscheidung innerhalb einer Klasse wieder.

Für die Klassifikation für jeden Bereich werden insbesondere Eigenschaften bestimmt. Diese Eigenschaften können beispielsweise die Helligkeit des Bereichs, die Form bzw. die Umrandung des Bereichs und/oder die Farbe innerhalb des Bereichs umfassen. Des Weiteren können die Eigenschaften Werte zum Schwerpunkt, zur Ausdehnung und/oder den Hauptachsen des Bereichs sowie zusätzlich oder alternativ zur Intensität monochromer Pixel des Bereichs umfassen. Zur Intensität monochromer Pixel des Bereichs kann die Maximalintensität, ein Mittelwert, die Standardabweichung, die Position des Maximums innerhalb des Bereichs, die Verteilung des Histogramms und/oder der Wert des mittleren Gradienten berücksichtigt werden. Außerdem können diese Werte alternativ oder zusätzlich nur für Pixel einer Farbe bestimmt werden, welche der Farbe eines Rücklichts eines Fahrzeuglichts entspricht, d. h. üblicherweise rot.

Des Weiteren können Eigenschaften berücksichtigt werden, mit denen mittelbar Farbinformationen gewonnen werden, indem verschiedene Vergleiche zwischen monochromen und roten Pixeln bestimmt werden, z. B. das Verhältnis zwischen dem Mittelwert des monochromen Niveaus und dem Mittelwert des roten Niveaus. Unter "monochrom" wird in diesem Zusammenhang auch der Grauwert bzw. die Helligkeit in diesem Bereich verstanden.

Schließlich ist es bei dem erfindungsgemäßen Verfahren möglich, einen Mittelwert der Eigenschaften unter Berücksichtigung mehrerer aufeinander folgender Bilder zu bilden.

Gemäß einer Ausgestaltung des erfindungsgemäßen Verfahrens werden die Klassifikationswerte der Bereiche mittels eines Lernalgorithmus' gewonnen und anschließend werden die Klassifikationswerte diskreten gewichteten Klassifikationswerten zugeordnet. Der Konfidenzwert wird dann aus dem gewichteten Klassifikationswert des Bereichs und der physikalischen Größe gebildet.

Gemäß einer Ausgestaltung des erfindungsgemäßen Verfahrens ist die physikalische Größe, die bei der Bildung des Konfidenzwertes herangezogen wird, der maximale Grauwert innerhalb des Bereichs, insbesondere der maximale Grauwert innerhalb des Bereichs normalisiert über den maximal möglichen Grauwert. Bei einer derartigen Bestimmung des Konfidenzwertes wird berücksichtigt, dass Fahrzeuge, die näher am eigenen Fahrzeug sind, hellere Bereiche auf dem Bild erzeugen als Fahrzeuge, die weiter weg sind. Entsprechend haben Bereiche, die Fahrzeugen zugeordnet werden, die in der Nähe des eigenen Fahrzeugs sind, einen höheren Konfidenzwert als Bereiche, die Fahrzeugen zugeordnet werden, die weiter weg sind. Ferner erhält ein heller Bereich, der von einer Reflexion des Eigenlichts des Fahrzeugs herrührt, einen niedrigen Konfidenzwert, wobei dieser Konfidenzwert sich nochmals verringert, falls die Reflexion von einem Infrastrukturelement herrührt, das sehr weit weg ist.

Gemäß einer weiteren Ausgestaltung des erfindungsgemäßen Verfahrens wird bereits an Hand der Klassifikation bestimmt, ob ein Bereich einem Fahrzeuglicht oder den Lichtern eines Fahrzeugs zugeordnet werden kann. Anschließend wird nur für die Bereiche, denen an Hand der Klassifikation nicht eindeutig ein Fahrzeuglicht zugeordnet werden kann, der Konfidenzwert gebildet.

Gemäß einer weiteren Ausgestaltung des erfindungsgemäßen Verfahrens kann zur Verbesserung der Verlässlichkeit des Verfahrens die Umgebung der Bereiche untersucht  werden, wobei bestimmt wird, ob sich in der Nähe eines Bereichs ein weiterer Bereich befindet, so dass die zwei Bereiche zwei Scheinwerfern oder Rücklichtern eines Fahrzeugs zugeordnet werden können. Es wird somit eine Paarbildung von Bereichen durchgeführt. Hieraus können Hinweise auf Doppelbereiche gewonnen werden, die insbesondere Lichtern von Kraftfahrzeugen zugeordnet werden können. An Hand dieser Untersuchung kann der Klassifikationswert eines Bereichs angepasst werden.

Gemäß einer weiteren Ausgestaltung des erfindungsgemäßen Verfahrens kann die zeitliche Entwicklung eines Bereichs an Hand einer Bildsequenz verfolgt werden. Da ein Verfolgen der Bereiche häufig jedoch schwierig ist, kann das erfindungsgemäße Verfahren auch unabhängig von einer solchen Verfolgung der Bereiche durchgeführt werden, indem die zeitliche Kohärenz der Konfidenzwerte bestimmt wird. Ein Konfidenzwert wird in diesem Fall in Abhängigkeit von seiner zeitlichen Kohärenz verändert. Hierfür wird insbesondere ein Akkumulationsfeld gebildet, bei dem für die Bildpunkte des Bildes der Konfidenzwert aufakkumuliert wird. Beispielsweise kann sich bei dem Akkumulationsfeld beim Übergang von einem Bild zu einem folgenden Bild der Konfidenzwert für einen Bildpunkt um einen festen Wert verringern und um den Konfidenzwert des entsprechenden Bildpunkts des folgenden Bildes erhöhen. Außerdem kann sich bei dem Akkumulationsfeld beim Übergang von einem Bild zu einem folgenden Bild der Bereich in Abhängigkeit von der zu erwartenden Bewegung eines dem Bereich zugeordneten Objekts ausbreiten. Schließlich kann an Hand der zeitlichen Entwicklung des Akkumulationsfeldes bestimmt werden, ob ein Bereich einem Fahrzeuglicht zugeordnet wird, wobei die Konfidenzwerte des Akkumulationsfeldes einer zeitlichen Hysterese unterworfen sind.

Vorteilhaft an der erfindungsgemäßen Bestimmung der zeitlichen Kohärenz der Konfidenzwerte ist, dass das schwierig umzusetzende Verfolgen eines Bereichs innerhalb einer Bildsequenz nicht erforderlich ist. Dabei reicht es aus, dass Akkumulationsfeld für nur sehr wenige Vollbilder zu berücksichtigen, um verlässlich die Bereiche Fahrzeuglichtern zuzuordnen, so dass die Zuordnung sehr schnell erfolgen kann.

Gemäß einer weiteren Ausgestaltung des erfindungsgemäßen Verfahrens wird der Verkehrsbereich in einem horizontalen Öffnungswinkel von mehr als 40° aufgenommen. Vorteilhaft an der Verwendung eines solchen Öffnungswinkels ist, dass das Bild nicht nur zum Detektieren von Fahrzeugen bei Dunkelheit verwendet werden kann, sondern auch von anderen Fahrzeuganwendungen, insbesondere Fahrerassistenzsystemen, genutzt werden kann. Bei einem derartigen Öffnungswinkel ist es jedoch schwierig, weit entfernte Fahrzeuglichter nachzuweisen. Gemäß einer Weiterbildung des erfindungsgemäßen Verfahrens wird das Bild daher mit einem Sensor aufgenommen, der einen Bereich aufweist, der nur in dem Wellenlängenbereich empfindlich ist, welcher der Rücklichtfarbe eines Fahrzeugs entspricht, d. h. üblicherweise rot, und einen anderen Bereich aufweist, der die Helligkeit des einfallenden Lichts, insbesondere im sichtbaren Spektrum, detektiert. Der Bereich, der die Helligkeit des einfallenden Lichts detektiert, detektiert dabei insbesondere kein Licht aus dem nahen Infrarotbereich.

Der Bereich, der nur in dem Wellenlängenbereich ist, welcher der Rücklichtfarbe eines Fahrzeugs entspricht, nimmt z. B. 25 % ein.

Das Bild wird insbesondere von einer Monochromkamera aufgenommen.

Bei dem eingangs genannten Verfahren zum Steuern zumindest eines Scheinwerfers eines Fahrzeugs werden nach dem vorstehend beschriebenen Verfahren andere Fahrzeuge im Verkehrsbereich vor dem Fahrzeug detektiert. Danach wird bestimmt, ob ein anderes Fahrzeug innerhalb der Leuchtweite bzw. innerhalb der Hell-Dunkel-Grenze bzw. des Lichtkegels des Scheinwerfers liegt, und, falls dies der Fall ist, wird die Einstellung des Scheinwerfers automatisch so verändert, dass das andere Fahrzeug nicht mehr innerhalb der Leuchtweite bzw. innerhalb der Hell-Dunkel-Grenze bzw. des Lichtkegels des Scheinwerfers liegt. Die Lichtverteilung des Scheinwerfers wird dabei so verändert, dass insbesondere der Fahrer des anderen Fahrzeugs nicht mehr geblendet wird. Dieses Verfahren wird insbesondere in Echtzeit durchgeführt. Im einfachsten Fall wird bei dem Scheinwerfer von der Fernlichtfunktion auf die Abblendlichtfunktion umgeschaltet. Des Weiteren kann die Lichtverteilung, einschließlich der Leuchtweite sowie gegebenenfalls auch die Form der Hell-Dunkel-Grenze an die Position eines detektierten anderen Fahrzeugs angepasst werden, so dass die Lichtverteilung bzw. Hell-Dunkel-Grenze genau das andere Fahrzeug ausspart, wobei es möglich ist, den Bereich rechts und links von dem anderen Fahrzeug weiterhin auszuleuchten.

Die erfindungsgemäße Vorrichtung zum Detektieren von Fahrzeugen bei Dunkelheit ist dadurch gekennzeichnet, dass mit der Bildverarbeitungsvorrichtung aus dem vom Sensor aufgenommenen Bild zusammenhängende Bereiche mit einer Helligkeit extrahierbar sind, die einen Schwellwert überschreiten. Ferner weist die Bildverarbeitungseinrichtung einen Klassifikator auf, mit dem die Bereiche zumindest in Abhängigkeit von ihrer Größe klassifizierbar sind, wobei bei der Klassifikation der Bereiche ein Klassifikationswert aus Eigenschaften des Bereichs gewonnen wird und der Klassifikationswert jedem Bereich zugeordnet wird und wobei die Klassifikationswerte anschließend diskreten gewichteten Klassifikationswerten zugeordnet werden, wobei für die Gewichtung Unterschiede in den Eigenschaften von Fahrzeuglichtern berücksichtigt werden, die von der Größe der Bereiche und/oder davon herrühren, dass die Bereiche von Scheinwerfern oder Rücklichtern herrühren. Ferner umfasst die Bildverarbeitungsvorrichtung eine Konfidenzeinheit, mit der für jeden Bereich ein Konfidenzwert, der ein Maß für die Ähnlichkeit des Bereichs des Bildes zu einem Fahrzeuglicht darstellt, aus dem gewichteten Klassifikationswert des Bereichs und einer physikalischen Größe, die dem Bereich zugeordnet ist, berechenbar ist. Schließlich umfasst die Bildverarbeitungsvorrichtung eine Zuordnungseinheit, mit der in Abhängigkeit von dem Konfidenzwert bestimmbar ist, ob ein Bereich einem Fahrzeuglicht zugeordnet wird.

Mit dem Sensor ist insbesondere ein Bild aufnehmbar, das es zumindest erlaubt, für die Bereiche die Helligkeit des Bereichs, die Form des Bereichs und/oder die Farbe innerhalb des Bereichs zu bestimmen. Des Weiteren können mit dem Sensor bzw. der Bildverarbeitungsvorrichtung beispielsweise die vorstehend mit Bezug zu dem erfindungsgemäßen Verfahren genannten Eigenschaften des Bildes aufgenommen werden.

Der Öffnungswinkel des Sensors in horizontaler Richtung ist insbesondere größer als 40°. Der Sensor kann ferner einen Bereich aufweisen, der nur in dem Wellenlängenbereich empfindlich ist, welcher der Rücklichtfarbe eines Fahrzeugs entspricht, und einen anderen Bereich aufweisen, der die Helligkeit des einfallenden Lichts detektiert. Dabei kann der Bereich, der nur in dem Wellenlängenbereich empfindlich ist, welcher der Rücklichtfarbe eines Fahrzeugs entspricht, z. B. 20 % bis 30 %, insbesondere 25 %, der Gesamtsensorfläche einnehmen.

Die erfindungsgemäße Vorrichtung zum Steuern zumindest eines Scheinwerfers eines Fahrzeugs umfasst die vorstehend beschriebene Vorrichtung zum Detektieren von anderen Fahrzeugen bei Dunkelheit sowie eine Verstelleinrichtung für den Scheinwerfer und eine Steuervorrichtung, die mit der Detektionsvorrichtung und der Verstelleinrichtung gekoppelt ist und mit der in Abhängigkeit von der Detektion der Detektionsvorrichtung die Einstellung des Scheinwerfers automatisch so veränderbar ist, dass das andere Fahrzeug nicht mehr innerhalb der Leuchtweite des Scheinwerfers liegt.

Gemäß einem weiteren Aspekt der Erfindung wird ein Verfahren zum Detektieren von Fahrzeugen bei Dunkelheit bereitgestellt, bei dem ein Bild eines Verkehrsbereichs im sichtbaren Spektrum aufgenommen wird, aus dem Bild zusammenhängende Bereiche mit einer Helligkeit extrahiert werden, die einen Schwellwert überschreitet, für jeden Bereich ein Konfidenzwert, der ein Maß für die Ähnlichkeit des Bereichs des Bildes zu einem Fahrzeuglicht darstellt, gewonnen wird, die zeitliche Kohärenz der Konfidenzwerte bestimmt wird und ein Konfidenzwert in Abhängigkeit von seiner zeitlichen Kohärenz verändert wird und in Abhängigkeit von dem Konfidenzwert bestimmt wird, ob ein Bereich einem Fahrzeuglicht zugeordnet wird. Bei diesem Verfahren wird die zeitliche Kohärenz der Konfidenzwerte wie vorstehend erläutert, insbesondere an Hand des Akkumulationsfeldes, bestimmt.

Des Weiteren kann das vorstehend erläuterte Verfahren zum Steuern zumindest eines Scheinwerfers eines Fahrzeugs nach dem zweiten Aspekt der Erfindung verwenden, um andere Fahrzeuge im Verkehrsbereich vor dem Fahrzeug zu detektieren.

Die Erfindung wird nun an Hand von Ausführungsbeispielen mit Bezug zu den beigefügten Zeichnungen erläutert.

Figur 1      zeigt schematisch, den Aufbau eines Ausführungsbeispiels der erfindungsgemäßen Vorrichtung zum Steuern der Scheinwerfer eines Fahrzeugs, welche ein Ausführungsbeispiel der Vorrichtung zum Detektieren von anderen Fahrzeugen bei Dunkelheit umfasst,

Figur 2      zeigt die Schritte eines ersten Ausführungsbeispiels des erfindungsgemäßen Verfahrens zum Detektieren von Fahrzeugen bei Dunkelheit

Figur 3      zeigt einen Hystereseprozess, welcher bei dem ersten Ausführungsbeispiel des erfindungsgemäßen Verfahrens durchgeführt wird,

Figur 4      zeigt die Schritte eines zweiten Ausführungsbeispiels des erfindungsgemäßen Verfahrens und die

Figuren 5A   bis 5C zeigen die Lichtkegel von zwei Scheinwerfern, welche gemäß der Erfindung angesteuert werden.

Die erfindungsgemäße Vorrichtung umfasst einen Sensor 1. Dieser Sensor 1 nimmt ein Bild eines Verkehrsbereichs im sichtbaren Spektralbereich auf. Der Sensor 1 kann beispielsweise hinter der Windschutzscheibe in Fahrtrichtung auf die Straße vor dem Fahrzeug ausgerichtet sein. Bei dem Sensor 1 handelt sich um ein monokulares Bildaufnahmesystem, mit welchem in Echtzeit Lichtquellen erfasst werden können, die sich über 600 m entfernt vor dem eigenen Fahrzeug befinden. Es können insbesondere über 600 m entfernte Scheinwerfer eines anderen Fahrzeugs und über 400 m entfernte Rücklichter eines anderen Fahrzeugs detektiert werden.

Der Sensor 1 zeichnet sich ferner dadurch aus, dass er nicht nur für eine Bildaufnahme verwendet werden kann, die nach einer Bildverarbeitung für die Steuerung der Scheinwerfer des Fahrzeugs verwendet wird. Vielmehr kann die Bildaufnahme des Sensors 1 auch für andere Fahrerassistenzsysteme wie einen Fahrspurassistenten und eine Verkehrszeichenerkennung benutzt werden. Diese Mehrfachverwendung des Sensors 1 senkt die Kosten bei der Herstellung des Fahrzeugs.

Fahrzeuge werden üblicherweise bei Dunkelheit an Hand der Lichtemission ihrer Scheinwerfer bzw. der Lichtemission ihrer Rücklichter detektiert. Dabei hat sich herausgestellt, dass eine einfache Schwellwertbildung hinsichtlich der in dem aufgenommenen Bild auftretenden Lichtintensität nicht zu einer verlässlichen Fahrzeugdetektion führt. Das von dem Fahrzeug selbst emittierte Licht, welches an verschiedenen Objekten, die sich im Verkehrsbereich vor dem Fahrzeug befinden, zurück zu dem Fahrzeug reflektiert wird, führt dazu, dass für mittlere und große Entfernungen schwer zwischen solchen Eigenlichtreflexionen und anderen Fahrzeugen unterschieden werden kann. Aus diesem Grund ist es erforderlich, sowohl den Sensor 1 als auch die anschließende Bildverarbeitung des von dem Sensor 1 aufgenommenen Bildes an diese Problematik anzupassen.

Um zunächst wirksam zwischen einem Scheinwerfer und einem Rücklicht unterscheiden zu können, weist der Sensor 1 einen Bereich auf, der nur in dem Wellenlängenbereich empfindlich ist, welcher der Rücklichtfarbe eines Fahrzeugs entspricht, d. h. dieser Sensorbereich ist nur für rotes Licht empfindlich. Da jedoch Farbsensoren im Vergleich zu monochromen Sensoren, d. h. Sensoren, welche die Helligkeit bzw. den Grauwert messen, umfasst der Sensor 1 ferner einen Bereich, welcher die Helligkeit im sichtbaren Spektralbereich detektiert. Bei dem Sensor 1 nimmt der Sensorbereich für die Helligkeit 75 % der Bildpunkte ein und der Bereich für rotes Licht 25 % der Bildpunkte. Mit einem solchen Sensor 1 lassen sich Bilder aufnehmen, die auch für andere Anwendungen verwendet werden können.

Der horizontale Öffnungswinkel des Sensors 1 ist größer als 40°. Bei einem solchen Öffnungswinkel ist es schwierig, weit entfernte Rücklichter zu detektieren. Beispielsweise wird ein Rücklicht mit einer Größe von 10 cm x 10 cm bei einem Abstand von mehr als 100 m auf weniger als einem Bildpunkt des Sensors 1 abgebildet. Allerdings bildet das von dem Rücklicht emittierte Licht einen größeren Kegel, so dass ein Rücklicht in etwa 400 m Entfernung noch auf einen Bereich von etwa 4 bis 10 Bildpunkten trifft. Um jedoch Farbinformationen aus dem von dem Sensor 1 gewonnenen Bild zu gewinnen, wird die vorgestellte Filteranordnung mit einem Rot- und drei Pixeln ohne Farbfilter bzw. eine so genannte Bayer-Matrix verwendet. Der Sensor 1 enthält 2 x 2 Blöcke mit einem einzelnen, im roten Spektralbereich empfindlichen Sektor und drei herkömmlichen monochromen Detektoren, die eine höhere Empfindlichkeit als farbempfindliche Detektoren haben, die jedoch auch Licht im roten Spektralbereich erfassen. Mit einem solchen Sensor ist es möglich, rote Lichtquellen von weißen Lichtquellen zu unterscheiden, gleichzeitig jedoch eine hohe Empfindlichkeit für die Bildpunkte ohne Farbfilter bereitzustellen. Es wird bemerkt, dass der Sensor 1 unempfindlich im nahen Infrarotbereich ist und mit 10 Bits pro Bildpunkt unter Verwendung einer logarithmischen Kurve arbeitet, die im Wesentlichen vollständig gesättigte Lichtpunkte verhindert, bei denen Information verloren geht.

Der Sensor 1 ist mit einer Bildverarbeitungsvorrichtung 2 verbunden. Die Bildverarbeitungsvorrichtung 2 analysiert das von dem Sensor 1 aufgenommene Bild so, dass helle Bildbereiche des aufgenommenen Bildes Fahrzeugen im Verkehrsbereich des eigenen Fahrzeugs zugeordnet werden können. Bei der Bildverarbeitung wird berücksichtigt, dass helle, von dem Sensor 1 aufgenommene Bereiche sich für Fahrzeuge in der Nähe des eigenen Fahrzeugs wesentlich von solchen Bereichen für weit entfernte Fahrzeuge unterscheiden. Entsprechende Unterschiede ergeben sich ferner für helle Bereiche, die von Scheinwerfern und solchen, die von Rücklichtern herrühren. Die Intensität von hellen Bereichen, die von Scheinwerfern herrühren, ist höher und weiß, wohingegen helle Bereiche, die von Rücklichtern herrühren, von geringerer Intensität und röter sind. Ferner wird bei der Bildverarbeitung berücksichtigt, dass die Vorrichtung für Fahrzeuge, die näher an dem eigenen Fahrzeug sind, schneller reagieren muss als für Fahrzeuge, die weiter von dem eigenen Fahrzeug entfernt sind.

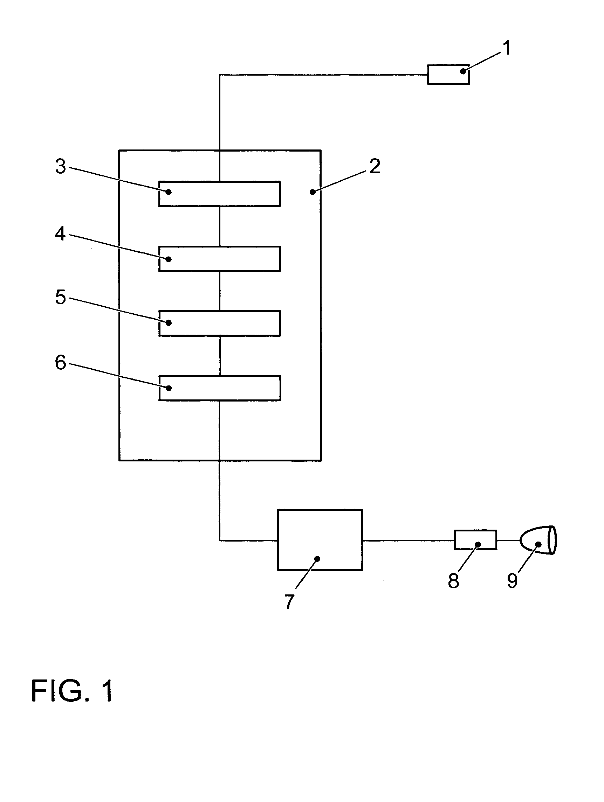

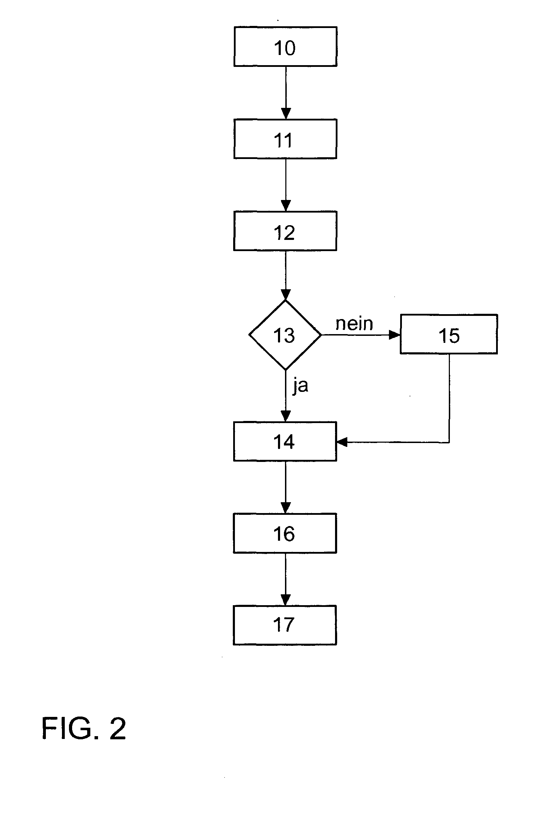

Im Folgenden werden die einzelnen Einheiten der Bildverarbeitungsvorrichtung 2 und die bei dem ersten Ausführungsbeispiel des erfindungsgemäßen Verfahrens durchgeführten Schritte mit Bezug zu den Figuren 1 bis 3 erläutert:

Zunächst wird im Schritt 10 wie vorstehend beschrieben mittels des Sensors 1 ein Bild des Verkehrsbereichs im sichtbaren Spektrum vor dem eigenen Fahrzeug aufgenommen.

Im Schritt 11 wird mittels der Extraktionseinheit 3 ermittelt, welche zusammenhängenden Bereiche des Bildes eine Helligkeit aufweisen, die einen bestimmten Schwellwert überschreiten. Diese Bildbereiche werden extrahiert. Für sie muss im Folgenden bestimmt werden, ob sie einem anderen Fahrzeug oder einem anderen Objekt, welches kein Fahrzeug ist, zugeordnet werden. Da die Extraktion auf einer einfachen Schwellwertbildung  beruht, kann sie von der Bildverarbeitungsvorrichtung 2 sehr schnell, d. h. bevorzugt in Echtzeit, durchgeführt werden. Die zusammenhängenden Bereiche des Bildes, welche hinsichtlich ihrer Helligkeit den Schwellwert überschreiten, werden auch als Blobs bezeichnet.

Für jeden Bereich werden dann die folgenden Schritte 12 bis 14 durchgeführt:

Im Schritt 12 werden die Bereiche von einem Klassifikator 4 klassifiziert. Ferner wird ihnen ein Klassifikationswert zugeordnet. Hierfür werden zunächst verschiedene Eigenschaften des Bereichs bestimmt. Von den Eigenschaften ist der maximale Grauwert des Bereichs und der Rotanteil des Bereichs besonders wichtig. Bei dem Verfahren des Ausführungsbeispiels werden ferner folgende weitere potenziell nützlichen Eigenschaften des Bereichs bestimmt und bei der Klassifikation verwendet: (1) die Binärwerte des Bereichs, insbesondere die Fläche, der Schwerpunkt, die Ausdehnung, die Umrandung und/oder die Hauptachsen; (2) die Intensität bzw. der Grauwert, der nur von monochromen Bildpunkten herrührt, insbesondere das Maximum, der Mittelwert, die Standardabweichung, die Position des Maximums innerhalb des Bereichs, die Verteilung des Histogramms und/oder die Größe des mittleren Gradienten; (3) dieselben Eigenschaften nur für rote Bildpunkte und (4) Eigenschaften, aus denen man Farbinformationen durch verschiedene Vergleiche zwischen monochromen und roten Bildpunkten gewinnen kann, z. B. das Verhältnis zwischen dem Mittelwert des monochromen Levels und dem Mittelwert des roten Levels.

Da es normalerweise nicht möglich ist, an Hand einer einzelnen Eigenschaft oder der vorstehend beschriebenen Eigenschaften sicher auf ein Fahrzeug als Lichtquelle zu schließen, werden die Eigenschaften der Bereiche einem Lernalgorithmus unterzogen. Mittels des Lernalgorithmus' erlangt man schließlich eine Klassifikation mit Klassifikationswerten für die Bereiche und schließlich mit diskreten gewichteten Klassifikationswerten für die Bereiche. Als Lernalgorithmus wird der Real-AdaBoost-Algorithmus verwendet, wie er in R. Schapire und Y. Singer, "Improved boosting using confidence-rated predictions" in Machine Learning, Bd. 37, Nr. 3, Seiten 297-336, 1999, beschrieben ist. Durch diesen Lernalgorithmus werden offensichtliche Unterschiede in den Eigenschaften von Fahrzeuglichtern berücksichtigt, um die verschiedenen Bereiche von vornherein zu unterteilen: Kleine und nicht kleine Bereiche sehen verschieden aus, ferner unterscheiden sich Bereiche, die von Scheinwerfern herrühren, von denen, die von Rücklichtern herrühren. Entsprechend diesem Ansatz wurden die Bereiche in vier Basisklassen eingeteilt:

- $C_{h,s}$: für die Detektion von entgegenkommenden Fahrzeugen, die sich in mittlerer bis großer Entfernung von dem eigenen Fahrzeug befinden;
- $C_{h,ns}$: für die Detektion entgegenkommender Fahrzeuge, die sich in Entfernungen in der Nähe des eigenen Fahrzeugs bis zu einer mittleren Entfernung befinden;
- $C_{t,s}$: für die Detektion vorausfahrender Fahrzeuge in mittlerer bis großer Entfernung;
- $C_{t,ns}$: für die Detektion vorausfahrender Fahrzeuge, die sich in der Nähe des eigenen Fahrzeugs bis zu einer mittleren Entfernung befinden.

Gemäß dem Grundsatz, dass es besser ist, eine falsche Zuordnung zu einem Fahrzeug zu erzeugen als eine richtige Zuordnung zu verpassen, wird nach der Einteilung der Bereiche in die Klassen der Maximalwert der vier Ausgangssignale des Lernalgorithmus' genommen.

Im Schritt 13 kann bereits an Hand dieser Basisklassifizierung eine erste Entscheidung getroffen werden, ob ein Bereich einem Fahrzeug zugeordnet werden soll oder nicht. Falls eine solche grobe Zuordnung möglich ist, fährt das Verfahren mit dem Schritt 14 fort. Falls eine solche grobe Zuordnung nicht möglich ist, fährt das Verfahren mit dem Schritt 15 fort, der später erläutert wird.

Selbst wenn die grobe Zuordnung zu einem Fahrzeug im Schritt 13 möglich ist, hat sich herausgestellt, dass diese grobe Zuordnung nicht zu einer hundertprozentigen Erkennung von Fahrzeugen führt. Außerdem kann nicht ausgeschlossen werden, dass eine Eigenlichtreflexion oder die Lichtemission eines anderen Objekts für ein Fahrzeuglicht gehalten wird.

Bei dem erfindungsgemäßen Verfahren wird daher im Schritt 14 mittels einer Konfidenzeinheit 5 für jeden Bereich ein Konfidenzwert ermittelt, der ein Maß für die Ähnlichkeit des Bereichs des Bildes zu einem Fahrzeuglicht darstellt. Dieser Konfidenzwert kann aus einem zuvor bestimmten Klassifikationswert des Bereichs und einer physikalischen Größe, die dem Bereich zugeordnet ist, berechnet werden. Bevorzugt werden jedoch mittels des Lernalgorithmus' aus den Klassifikationswerten diskrete, gewichtete Klassifikationswerte für die Bereiche gewonnen.

Der Klassifikationswert ergibt sich aus dem vorstehend beschriebenen Real-AdaBoost-Algorithmus unter Verwendung von Beispielen von Bereichen, die von Fahrzeuglichtquellen herrühren, und entsprechenden Gegenbeispielen. Es ergibt sich ein Klassifikationswert c, wobei positive Klassifikationswerte anzeigen, dass ein Bereich einem Fahrzeuglicht ähnlich ist, und negative Klassifikationswerte, die auf das Gegenteil hinweisen. Die Klassifikationswerte c werden nun in entsprechende gewichtete Klassifikationswerte diskretisiert, wobei die Gewichtungen wie folgt zugeordnet werden:

$$
\omega = \begin{cases}
\omega_+ & \text{wenn} & c \geq t_+ & \text{gilt} \\
\omega_0 & \text{wenn} & t_0 \leq c < t_+ & \text{gilt} \\
\omega_- & \text{wenn} & t_- \leq c < t_0 & \text{gilt} \\
0 & \text{wenn} & c < t_- & \text{gilt} \quad ,
\end{cases}
$$

wobei $t_+$, $t_0$ und $t_-$ Schwellwerte sind, die für jede Klasse gesetzt sind, und $\omega_+$, $\omega_0$ und $\omega_-$ entsprechende Gewichtungen sind, die für jede Klasse definiert sind. Oberhalb $t_+$ ist man sicher, dass ein Bereich einem Fahrzeug zugeordnet werden kann, und unterhalb $t_-$ ist man sicher, dass dieser Bereich keinem Fahrzeug zugeordnet werden kann. Der Bereich von $t_-$ bis $t_+$ wird als nicht sicherer Ausgang der Klassifikation gewertet, wobei von $t_-$ bis $t_0$ angenommen wird, dass der Bereich einer Lichtquelle, die nicht von einem anderen Fahrzeug herrührt, ähnlicher ist, wohingegen im Bereich von $t_0$ bis $t_-$ angenommen wird, dass die Bereiche ähnlicher einem Fahrzeuglicht sind. Die folgende Tabelle zeigt ein Beispiel für die verwendeten Schwellwerte:

| Um keine falsch klassifizierten Bereiche zu erhalten | Scheinwerferklassifikation | | Rücklichtklassifikation | |
|---|---|---|---|---|
| | klein | nicht klein | klein | nicht klein |
| $(t, \omega)_+$ | (1, 1) | (1, 1'5) | (1, 0'5) | (1, 1) |
| $(t, \omega)_0$ | (0, 0'5) | (0, 1) | (0, 0'25) | (0, 0'25) |

(fortgesetzt)

| Um keine falsch klassifizierten Bereiche zu erhalten | Scheinwerferklassifikation | | Rücklichtklassifikation | |
|---|---|---|---|---|
| | klein | nicht klein | klein | nicht klein |
| $(t, \omega)$ | (-2, 0) | (-2, 0) | (-2, 0) | (-2, 0) |
| richtig klassifiziert (Fahrzeuge/ keine Fahrzeuge) | 78 % / 75 % | 97 % / 97 % | 60 % / 65 % | 94 % / 93 % |
| keine sichere Entscheidung (Fahrzeuge/ keine Fahrzeuge) | 22 % / 25 % | 3 % / 3 % | 40 % / 35 % | 6 % / 7 % |

Es ergibt sich, dass bei diesen Schwellwerten für vorstehende Gleichung keine Bereiche falsch klassifiziert werden. Ferner ist die richtige Klassifizierung für nicht kleine Bereiche über 90 %.

Aus den gewichteten Klassifikationswerten wird nun ein Konfidenzwert $v$ für jeden Bereich berechnet. Nimmt man an, dass $g$ der maximale Grauwert eines gegebenen Bereichs normalisiert über den maximal möglichen Grauwert für einen Bereich ist, wird der Konfidenzwert wie folgt definiert:

$$v = \omega \times g \qquad ,$$

wobei $\omega$ der dem Bereich zugeordnete gewichteten Klassifikationswerte ist. Der Konfidenzwert ergibt sich somit aus der Sicherheit bei der Klassifikation mal der Sicherheit einer physikalischen Größe, die im vorliegenden Fall der maximale Grauwert des Bereichs, insbesondere der maximale Grauwert eines gegebenen Bereichs normalisiert über den maximal möglichen Grauwert, ist. Der maximale Grauwert beeinflusst somit sowohl den gewichteten Klassifikationswert als auch die physikalische Größe. Jedoch werden bei der Gewinnung der gewichteten Klassifikationswerte mittels eines Algorithmus' erlernte Schwellwerte mittels verschiedener Eigenschaften des Grauwerts verwendet, wohingegen der Grauwert bei der Berechnung der physikalischen Größe direkt verwendet wird.

Bei der vorstehend angegebenen Berechnung des Konfidenzwertes wird berücksichtigt, dass Fahrzeuge, die näher am eigenen Fahrzeug sind, hellere Bereiche in dem von dem Sensor 1 aufgenommenen Bild erzeugen werden als Fahrzeuge, die weiter weg sind. Folglich werden Bereiche, die als zugehörig zu einem Fahrzeug klassifiziert werden, und zwar zu einem Fahrzeuge in der Nähe des eigenen Fahrzeugs, einen höheren Konfidenzwert haben. Falls ein Fahrzeug weiter weg ist, wird der zugehörige Bereich des Bildes des Sensors 1 zwar einen hohen Konfidenzwert haben, jedoch einen geringeren als der Bereich, der einem näheren Fahrzeug zugeordnet ist. Ein heller Bereich, der von einer Reflexion herrührt, wird einen nicht so hohen Konfidenzwert haben, falls er richtig klassifiziert wurde, und dieser Konfidenzwert wird noch geringer für Bereiche sein, die von Reflexionen herrühren, die von weit entfernten Objekten herrühren.

Falls sich im Schritt 13 ergeben hat, dass sich die Basisklassifikation zu einem Fahrzeug nicht herstellen lässt, werden im Schritt 15 zusätzliche Informationen für die Klassifizierung hinzugezogen. Dabei kann insbesondere die Umgebung des Bereichs untersucht werden. Bei dieser Untersuchung kann bestimmt werden, ob sich in der Nähe eines Bereichs ein weiterer Bereich befindet, so dass die beiden Bereiche zwei Scheinwerfern oder Rücklichtern eines anderen Fahrzeugs zugeordnet werden können. Beispielsweise kann für die Bereiche, für welche sich bei der Basisklassifikation im Schritt 12 ergeben hat, dass $t_- \le c \le t_+$ gilt, insbesondere eine solche Umgebungsuntersuchung durchgeführt werden. Ergibt sich bei der Umgebungsuntersuchung ein Lichtpaar, ist dies ein Hinweis auf einen Zwillingsbereich, welcher von dem rechten und linken Scheinwerfer bzw. dem rechten und linken Rücklicht eines Fahrzeugs herrührt. Selbstverständlich führt diese Untersuchung nur für Fahrzeuge mit zwei Scheinwerfern bzw. Rücklichtern zu einem positiven Ergebnis, jedoch nicht für Motorräder oder dergleichen.

Bei der Untersuchung der Umgebung wird für jeden Bereich ein Fenster einer Größe, die proportional zu der Umrandung des Bereichs ist, auf der linken und rechten Seite des Bereichs platziert. Innerhalb jedes Fensters auf der linken und auf der rechten Seite wird nach anderen Bereichen gesucht, deren Schwerpunkt innerhalb eines der Fenster liegt. Wenn ein solcher möglicher Zwillingsbereich gefunden wurde, werden einige der vorstehend beschriebenen Eigenschaften miteinander verglichen. Jeder Vergleich umfasst die Berechnung eines Verhältnisses, z. B. das Verhältnis der maximalen Grauwerte der beiden Bereiche. Diese Verhältnisse bilden einen Eigenschaftssatz, der mit anderen Eigenschaften wie dem Abstand der Schwerpunkte, dem Absolutwert des maximalen Grauwerts usw. verknüpft werden kann. Diese Werte bilden einen Eigenschaftssatz, der für den vorstehend beschriebenen Real-AdaBoost-Algorithmus zur Klassifikation verwendet wird. Das neue Klassifikationsresultat des Lernalgorithmus' wird verwendet, um den gewichteten Klassifikationswert $\omega$ zu modifizieren, der während der vorstehend beschriebenen Klassifikation erlangt wurden. Dabei wird folgende Regel verwendet: Falls sich aus der Paarungsklassifikation ein negativer Wert ergibt (keine Zwillingsbereiche) wird der gewichteten Klassifikationswert $\omega$ nicht modifiziert, andernfalls wird dieser gewichteten Klas-

sifikationswert hochgesetzt, d. h. $\omega_-$ wird zu $\omega_0$ oder $\omega_0$ wird zu $\omega_+$. Diese gewichteten Klassifikationswerte werden dann bei den weiteren Verfahrensschritten zu Grunde gelegt.

Nachdem im Schritt 14 die Konfidenzwerte für die Bereiche bestimmt worden sind, wird im Schritt 16 die zeitliche Kohärenz der Konfidenzwerte bestimmt. Hierfür wird eine zeitliche Kohärenzanalyse durchgeführt. Es wird darauf hingewiesen, dass die Konfidenzwerte für die anschließende zeitliche Kohärenzanalyse auch auf andere Weise als die vorstehend beschriebene gewonnen werden können. Andererseits kann die zeitliche Kohärenzanalyse auch weggelassen werden, wenn die gewichteten Konfidenzwerte wie vorstehend beschrieben ermittelt worden sind.

Eine Möglichkeit für eine Kohärenzanalyse basiert auf einer Zielverfolgung, d. h. die zeitliche Veränderung der Bereiche in dem vom Sensor 1 aufgenommenen Bild wird verfolgt. Eine solche Zielverfolgung wird optional im zweiten Ausführungsbeispiel des erfindungsgemäßen Verfahrens durchgeführt. Sie ist jedoch schwierig umzusetzen und nicht fehlerfrei. Im vorliegenden ersten Ausführungsbeispiel wird daher eine Kohärenzanalyse durchgeführt, welche keine Zielverfolgung erfordert.

Bei der zeitlichen Kohärenzanalyse dieses Ausführungsbeispiels wird ein Akkumulationsfeld **A** gebildet, um zu bestimmen, ob die zugeordneten Konfidenzwerte zeitlich kohärent sind. Das Akkumulationsfeld **A** hat dieselben Dimensionen wie das ursprüngliche Bild. Bei der Erneuerung des Akkumulationsfeldes werden folgende Schritte durchgeführt:

1. Die Werte des Akkumulationsfeldes **A** reichen von 0 bis zu einem gegebenen Wert $M_A$, beginnend bei **A** = 0.

2. Wenn ein neues Bild *k* gewonnen wurde:

(a) Verringern von **A.** Es wird ein Verfall der Akkumulation durch den Rechenschritt **A** = max(0,**A**-d) durchgeführt, wobei d eine feste Zahl ist, die den Verfallsanteil bestimmt: Beginnt man bei $M_A$, benötigt man $M_A$/d Schritte, um 0 zu erhalten. Dabei kann d bei verschiedenen Zellen von dem Akkumulationsfeld **A** und durch ein Hystereseverfahren verschiedene Werte aus zwei Möglichkeiten annehmen.

(b) Ausbreiten von A. Die Werte jeder Zelle werden entsprechend der erwarteten Bewegung der Ziele ausgebreitet, um Konfidenzwerte, die von demselben Ziel herrühren, von Bild zu Bild zu kombinieren.

(c) Erhöhen von A. Nimmt man an, dass $\mathbf{A}_i^{(k)}$ ein Koordinatensatz ist, der den Bereich *i* bildet, der bei dem gegenwärtigen Bild *k* detektiert wurde, und $v_i^{(k)}$ der entsprechende Konfidenzwert ist, wird folgende Erneuerungsformel verwendet: $\mathbf{A}_{Ai}^{(k)} = \min(\mathbf{A}^{(k-1)}{}_{Ai} + v_i^{(k)}, M_A)$, wobei $\mathbf{A}_{Ai}$ für die Zelle von **A** steht, deren Koordinaten **A**$_i$ entsprechen.

Bei dem Ausbreitungsschritt wird eine Art Dilatation durchgeführt, die ähnlich der mathematischen Morphologie der Grauwerte ist, dessen strukturierendes Element jedoch bei verschiedenen Akkumulationszellen verschieden ist. Der Unterschied rührt von der erwarteten Bewegung für die verschiedenen Ziele im Bildraum her: Ziele in der Nähe des Horizonts bleiben relativ statisch von Bild zu Bild, wohingegen die Position näherer Ziele stärker variiert. Ferner bewegen sich entgegenkommende Fahrzeuge schneller in Richtung des unteren Rands des Bildes, wohingegen vorausfahrende Fahrzeuge ein solches Verhalten nicht zeigen. Daher wird das Akkumulationsfeld insbesondere für Bereiche verwendet, die ähnlicher solchen sind, die von Scheinwerfern herrühren, als solchen, die von Rücklichtern herrühren, und ein anderes Feld für die restlichen Bereiche. Dieses andere Feld wird entsprechend der Klassifikation gewählt, wenn diese einen höheren Ausgang während der Basisklassifikation hatte.

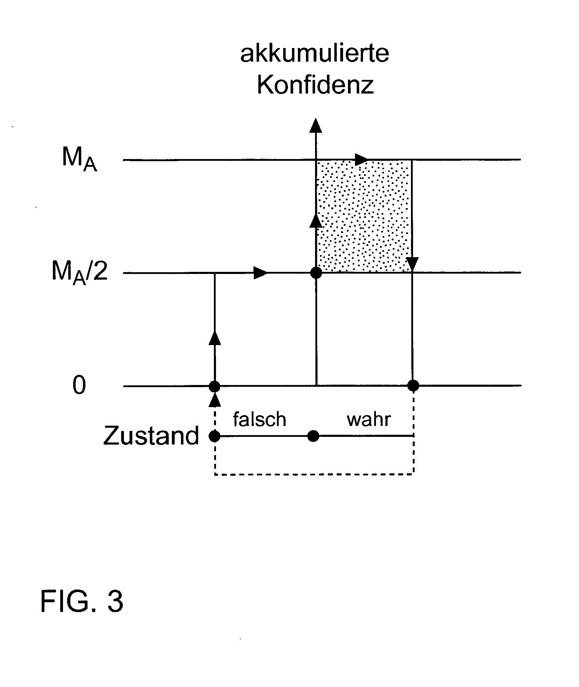

Die Bereiche für das Bild *k* werden schließlich als Fahrzeuglichter oder keine Fahrzeuglichter entsprechend einem Hysteresekriterium bezogen auf die entsprechenden Positionen des Akkumulationsfeldes klassifiziert. Dies bedeutet, dass jedes Akkumulationsfeld ein zugeordnetes Zustandsfeld **S** derselben Dimension hat. Die Hysterese wird dann, wie in Figur 3 gezeigt, wie folgt durchgeführt:

- Falls die Zelle $\mathbf{A}_{i,j}$ null ist, wird der entsprechende Wert des Zustandsfeldes $\mathbf{S}_{i,j}$ auf den Wert FALSCH gesetzt. Der nächste Verfallsanteil für $\mathbf{A}_{i,j}$ ist $d = d_f$, wobei $d_f$ eine feste Zahl ist;
- falls $\mathbf{A}_{i,j} \geq M_A/2$ ist, wird $\mathbf{S}_{i,j}$ auf den Wert WAHR gesetzt und $d = d_t$, wobei $d_t$ ein fester Wert ist;
- falls $0 < \mathbf{A}_{i,j} < M_A/2$ gilt, wird $\mathbf{S}_{i,j}$ nicht verändert und es ergibt sich auch kein zugeordneter Verfall von $\mathbf{A}_{i,j}$.

Folglich wird für einen gegebenen Bereich *i* mit $\mathbf{A}_i^{(k)}$ bei Bild *k* die logische Operation ODER auf $\mathbf{S}_{Ai}^{(k)}$ angewandt, um die Bereiche endgültig einem Fahrzeug oder keinem Fahrzeug zuzuordnen.

Während der zeitlichen Kohärenzanalyse wird der Maximalwert für das Hysteresekriterium auf $M_A = 2$ gesetzt, so dass die zu einer Zelle des Akkumulationsfeldes zugeordnete Hysterese den Zustand WAHR oberhalb $M_A/2 = 1$ annimmt und den Zustand FALSCH nicht erreicht, bevor wieder der Wert null erreicht wird, wie in Figur 3 dargestellt. Für die Steuerung des Verfalls werden folgende Werte gewählt: $(d_t, d_f) = (45, 15)$ Bilder, was bedeutet, dass, wenn ein Fahrzeug verschwindet, das System den neuen freien Bereich noch für etwa zwei Sekunden beleuchtet. Dieselben Werte werden für das Akkumulationsfeld der scheinwerferähnlichen Bereiche und für die rücklichtähnlichen Bereiche gewählt.

Wie erläutert, wird somit zur Bestimmung der zeitlichen Kohärenz ein Akkumulationsfeld gebildet, bei dem für die Bildpunkte des Bildes der Konfidenzwert aufakkumuliert wird. Bei einem Übergang von einem Bild zu einem folgenden Bild wird der Konfidenzwert für einen Bildpunkt um einen festen Wert verringert und um den Konfidenzwert des entsprechenden Bildpunkts des folgenden Bildes erhöht. Dabei wird sich beim Übergang von einem Bild zu einem folgenden Bild der Bereich in Abhängigkeit von der zu erwartenden Bewegung eines dem Bereich zugeordneten Objekts ausbreiten. Die endgültige Entscheidung, ob ein Bereich einem Fahrzeuglicht zugeordnet wird, wird an Hand der zeitlichen Entwicklung des Akkumulationsfeldes bestimmt, wobei die Konfidenzwerte des Akkumulationsfeldes einer zeitlichen Hysterese unterworfen sind. Diese endgültige Zuordnung wird mittels der Zuordnungseinheit 6 im Schritt 17 getroffen.

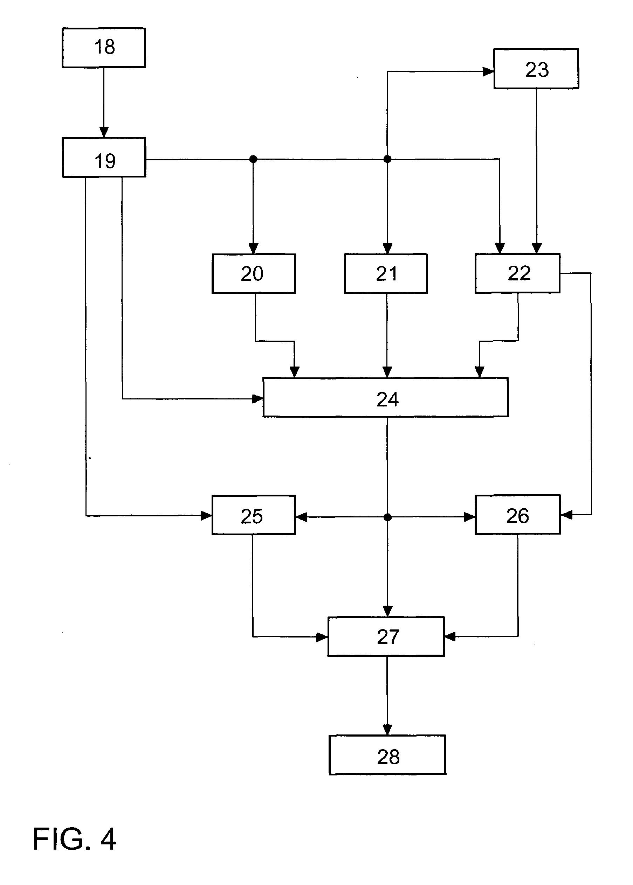

Im Folgenden wird an Hand von Figur 4 ein zweites Ausführungsbeispiel des erfindungsgemäßen Verfahrens zum Detektieren von Fahrzeugen bei Dunkelheit beschrieben:

Wie bei dem ersten Ausführungsbeispiel wird ein Sensor 1 zum Aufnehmen eines Bildes eines Verkehrsbereichs im sichtbaren Spektrum und eine Bildverarbeitungsvorrichtung 2 verwendet. Die Detektion der Fahrzeuge bei Dunkelheit erfolgt an Hand der Fahrzeuglichter, d. h. für entgegenkommende Fahrzeuge an Hand der Lichtemission der vorderen Scheinwerfer, und für vorausfahrende Fahrzeuge an Hand der Lichtemission der Rücklichter.

Im Schritt 18 wird wie im Schritt 10 des ersten Ausführungsbeispiels ein Bild des Verkehrsbereichs vor dem eigenen Fahrzeug aufgenommen. Im Schritt 19 werden wie im Schritt 11 des Verfahrens des ersten Ausführungsbeispiels zusammenhängende Bereiche mit einer Helligkeit extrahiert, die einen Schwellwert überschreitet. Es werden somit in dem von dem Sensor 1 erzeugten Bild zusammenhängende helle Bildpunkte gesucht, die eine vorgegebene Intensität und gegebenenfalls zusätzlich eine vorgegebene Größe überschreiten. Solche Bildbereiche können zu Lichtquellen eines anderen Fahrzeugs gehören, jedoch auch zu anderen Lichtquellen oder Reflexionen der Lichtemission des eigenen Fahrzeugs. Als Ergebnis des Schrittes 19 erhält man ein Binärbild, in dem zusammenhängende Bereiche mit hellen Bildpunkten durch eine Umrandung festgelegt sind. Ferner werden wie im ersten Ausführungsbeispiel zu den Bereichen Eigenschaften wie insbesondere die Größe, die Helligkeit, die Farbe etc. bestimmt. Falls sich bei der Analyse eines einzelnen Bildes ergibt, dass ein Bereich mit hoher Wahrscheinlichkeit einem Fahrzeuglicht zugeordnet werden kann, kann das Verfahren für diese Bereiche direkt mit Schritt 25 fortfahren. Des Weiteren können die Bereiche an Hand der Eigenschaften der Bereiche im Schritt 24 klassifiziert werden. Schließlich können noch weitere Informationen zu den Bereichen gewonnen werden, wie es im Folgenden beschrieben wird:

Im Schritt 20 wird für jeden Bereich eine Umgebungsanalyse des Bereichs durchgeführt. Diese Umgebungsanalyse kann beispielsweise die im ersten Ausführungsbeispiel beschriebene Paarbildung auf Grund von Zwillingsbereichen umfassen, bei der zwei helle Bereiche einem Scheinwerferpaar oder einem Rücklichtpaar jeweils eines Fahrzeugs zugeordnet wird. Das Ergebnis der Umgebungsanalyse im Schritt 20 wird im Schritt 24 weiterverarbeitet.

Ein weiterer optionaler Verarbeitungsschritt betrifft das Verfolgen eines oder mehrerer Bereiche in einer Bildsequenz und die Bestimmung der Bewegung des Bereichs bzw. der Bereiche. Um das Wiederfinden eines Bereichs innerhalb der Bildsequenz zu erleichtern, wird hierfür im Schritt 23 eine globale Bewegungsschätzung durchgeführt. Dabei wird die Eigenbewegung des Fahrzeugs berechnet und entsprechend bei der Verfolgung der Bereiche berücksichtigt. Die globale Bewegung kann im Schritt 23 an Hand der Korrelation der Bewegung mehrerer Objekte im Bild bestimmt werden. Sie kann auch über Werte, die von der Odometrie im Fahrzeug oder anderen Sensoren im Fahrzeug, wie z. B. Beschleunigungssensoren, zur Verfügung gestellt werden, bestimmt werden. Ebenso ist eine Kombination beider Ansätze möglich. Die Bildverarbeitungsvorrichtung 2 kann hierfür beispielsweise mit dem Fahrzeugbus gekoppelt sein. Im Schritt 22 wird unter Berücksichtigung der im Schritt 23 ermittelten globalen Bewegung des Fahrzeugs die Bewegung der einzelnen Bereiche in der Bildsequenz ermittelt.

Wenn die Bereiche mit der Bildverarbeitungsvorrichtung 2 über mehrere Bilder verfolgt werden, ist es ferner im Schritt 21 möglich, die internen Eigenschaften der Bereiche, die von Bild zu Bild etwas schwanken können, über mehrere Bilder zu stabilisieren. Hierzu werden die Eigenschaften der Bereiche im Schritt 21 über mehrere Bilder zeitlich gemittelt. Dieser Verfahrensschritt ist insbesondere für die Ermittlung der Farbe eines sehr kleinen Bereichs vorteilhaft: Bei einem kleinen Bildbereich trifft das Licht auf nur sehr wenige Bildpunkte des Sensors 1. Bei einem Farbbildsensor sind die einzelnen Bildpunkte jeweils nur für eine Farbe, üblicherweise für rot, grün oder blau, empfindlich. Eine Farbbestimmung ist erst dann möglich, wenn der Bereich auf genügend Bildpunkte aller Farbkomponenten trifft. Wenn die Größe des Bereichs hierfür nicht ausreicht, können im Schritt 21 die Bildpunkte des Bereichs herangezogen werden, die für mehrere aufeinander folgende Bilder ermittelt wurden.

Die Daten, die in den Schritten 19, 20, 21 und/oder 22 gewonnen wurden, werden im Schritt 24 weiterverarbeitet. Wie im ersten Ausführungsbeispiel beschrieben, werden die Bereiche in Abhängigkeit von ihrer Größe sowie den weiteren in den vorangehenden Schritten gewonnenen Eigenschaften klassifiziert und es wird für die Bereiche wie vorstehend beschrieben ein Konfidenzwert, insbesondere der gewichtete Konfidenzwert, bestimmt. Je höher der Konfidenzwert ist, desto höher ist die Wahrscheinlichkeit, dass der Bereich einem Fahrzeuglicht, d. h. dem Scheinwerfer eines entgegenkommenden Fahrzeugs oder dem Rücklicht eines vorausfahrenden Fahrzeugs, zugeordnet werden kann.

Reicht die Beobachtung eines Bereichs in einem Bild nicht aus, um eine eindeutige Klassifikation vorzunehmen, wird für jeden Bereich der Konfidenzwert im Schritt 26 über mehrere Bilder aufakkumuliert. Hierbei wird die im Schritt 22 ermittelte Bewegung jedes Bereichs berücksichtigt. Wenn ein Bereich über mehrere Bilder verfolgt werden kann, wird über die Akkumulation bzw. die Verringerung der Konfidenzwerte des Bereichs in mehreren aufeinander folgenden Bildern ein neuer Konfidenzwert bestimmt.

Parallel hierzu bzw. alternativ dazu kann der Konfidenzwert für jeden Bildpunkt akkumuliert bzw. verringert werden. Hierfür ist eine Verfolgung der Bereiche nicht erforderlich. Im Schritt 25 werden die Bildbereiche, d. h. die Bildpunkte innerhalb der Umrandung eines bestimmten Bereichs, der mittels der vorstehenden Schritte ermittelt worden ist, mit dem Konfidenzwert dieses Bereichs versehen. Von dem Konfidenzwert des Bereichs wird bei einem folgenden Bild ein bestimmter Wert, wie im ersten Ausführungsbeispiel erläutert, automatisch abgezogen, so dass der Konfidenzwert in Bereichen, in denen in folgenden Bildern keine hellen Bereiche mehr liegen, mit der Zeit auf null sinkt. Gleichzeitig wird bei jedem folgenden Bild auf den Konfidenzwert eines Bereichs die akkumulierte Konfidenz des darunter liegenden Bereichs addiert. Hieraus ergibt sich ein neuer Konfidenzwert, der nicht nur die aktuelle Konfidenz des Bereichs beinhaltet, sondern über eine zweidimensionale Akkumulation auch die Konfidenzen kurz vorangegangener Bereiche in diesem Bildbereich enthält. Darüber hinaus kann im Schritt 25 dieses zweidimensionale Konfidenzfeld eines Bereichs bei dem Verfall von Bild zu Bild vergrößert werden. Die Ausbreitungsrichtung bei der Vergrößerung dieses Konfidenzfeldes kann der erwarteten Objektbewegung bzw. der erwarteten Bewegung des eigenen Fahrzeugs angepasst werden. Somit kann sichergestellt werden, dass trotz der Bewegung eines Bereichs der Bereich noch auf Konfidenzwerten liegt, welche im vorausgegangenen Bild durch den gleichen Bereich generiert wurden.

Ergibt sich schließlich bei der im Schritt 24 erzeugten Klassifikation ein Konfidenzwert, der eine eindeutige Entscheidung für einen Bereich zulässt, ob er einem Fahrzeuglicht zugeordnet werden kann oder nicht, kann das Ergebnis des Schrittes 24 auch direkt weiterverarbeitet werden. Die auf diese Weise in den Schritten 24, 25 bzw. 26 bestimmten Konfidenzwerte werden im Schritt 27 zusammengeführt und es wird eine abschließende Entscheidung getroffen, ob es sich bei einem Bereich um ein relevantes Objekt handelt, d. h., ob die Helligkeit in diesem Bereich von einer Lichtquelle eines anderen Fahrzeugs herrührt oder nicht.

Im Schritt 28 werden schließlich Bereiche, die anderen Fahrzeugen zugeordnet werden können, mit den entsprechenden Koordinaten relativ zum eigenen Fahrzeug ausgegeben. Aus diesen Koordinaten ergeben sich insbesondere die Winkelpositionen der detektierten vorausfahrenden oder entgegenkommenden Fahrzeuge relativ zum eigenen Fahrzeug.

Es wird darauf hingewiesen, dass die Schritte 20, 21 und 22 in Abhängigkeit von dem Ergebnis des Schrittes 19 insgesamt weggelassen werden können oder nur ein einzelner oder einzelne dieser Schritte durchgeführt wird bzw. werden. Ferner können die Schritte 25 und 26 parallel oder alternativ ausgeführt werden. Schließlich können sie auch in Abhängigkeit von dem Ergebnis des Schrittes 24 ganz weggelassen werden.

Schließlich kann bei den Schritten 6 und/oder 9 die mit Bezug zu dem ersten Ausführungsbeispiel erläuterte Hysterese eingesetzt werden. Wenn ein Konfidenzwert überschritten wird, wird der Bereich als relevantes Objekt klassifiziert. Wenn ein niedrigerer Wert unterschritten wird, wird der Bereich nicht mehr als relevantes Objekt klassifiziert. Die Akkumulation der Konfidenzwerte bei den Verarbeitungsschritten 25 bzw. 26 bzw. die Akkumulation bei dem Verarbeitungsschritt 21 wird bei einem eingestellten Maximalwert abgeschnitten. Somit kann gewährleistet werden, dass die untere Hystereseschwelle in hinreichender Zeit wieder unterschritten wird.

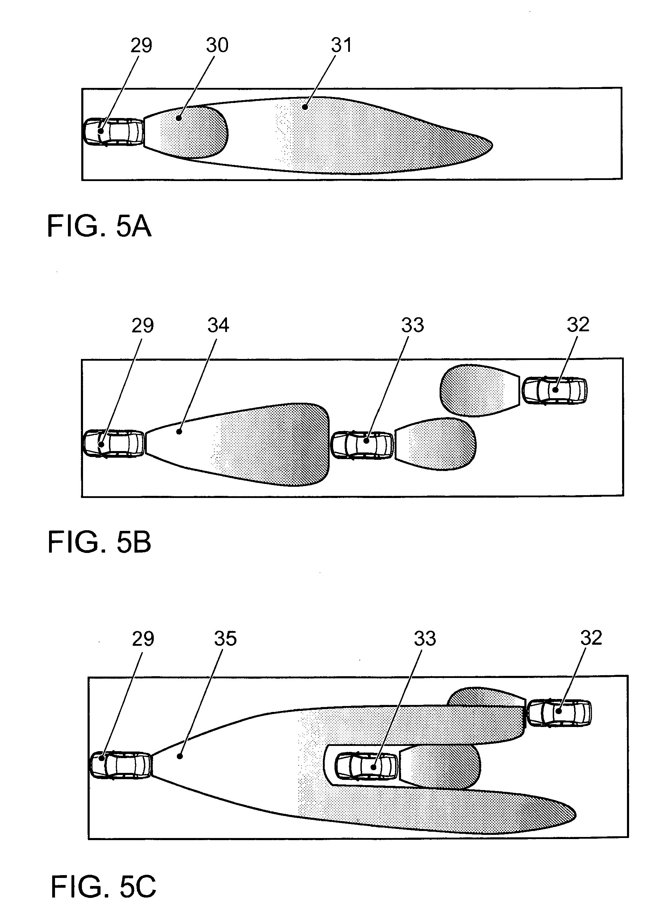

Das Verfahren zum Detektieren von Fahrzeugen bei Dunkelheit, welches an Hand der beiden Ausführungsbeispiele erläutert worden ist, erzeugt Daten, denen sich entnehmen lässt, bei welcher Position sich ein anderes Fahrzeug, welches an Hand der Scheinwerfer oder der Rücklichter identifiziert worden ist, im Verkehrsbereich vor dem eigenen Fahrzeug befindet. Im Folgenden wird mit Bezug zu Figur 5 ein Ausführungsbeispiel des Verfahrens und der Vorrichtung zum Steuern zumindest eines Scheinwerfers eines Fahrzeugs erläutert:

Die von der Bildverarbeitungsvorrichtung 2 gewonnenen Daten werden an eine Steuervorrichtung 7 übertragen. Die Steuervorrichtung 7 ist mit einer Verstelleinrichtung 8 für den Scheinwerfer 9 des eigenen Fahrzeugs gekoppelt. Bevorzugt ist die Steuervorrichtung 7 mit Verstelleinrichtungen 8 für beide Scheinwerfer der Scheinwerferanordnung des Fahrzeugs verbunden. Die Steuervorrichtung 7 kann die Fahrzeugscheinwerfer so ansteuern, dass die Gesamtlichtverteilung der Scheinwerferanordnung des eigenen Fahrzeugs verändert wird. Der Aufbau der Scheinwerferanordnung kann der Scheinwerferanordnung entsprechen, wie sie in der WO 2008/037388 A2 beschrieben ist. Die möglichen Lichtverteilungen bzw. die Hell-Dunkel-Fenster bzw. die winkelabhängige Leuchtweite der Lichtverteilungen sind in den Figuren 5A bis 5C gezeigt.

In Figur 5A wird entweder ein herkömmliches Abblendlicht mit der Lichtverteilung 30 erzeugt, welche eine geringe Leuchtweite aufweist, die dazu führt, dass insbesondere vorausfahrende Fahrzeuge 33 nicht geblendet werden. Ferner ist die Lichtverteilung 30 üblicherweise asymmetrisch, so dass insbesondere entgegenkommende Fahrzeuge 32 nicht geblendet werden.

Des Weiteren ist in Figur 5A die Lichtverteilung eines herkömmlichen Fernlichts 31 mit einer sehr großen Leuchtweite gezeigt. Die Lichtverteilung eines solchen Fernlichts 31 führt üblicherweise dazu, dass sowohl vorausfahrende Fahrzeuge 33 als auch entgegenkommende Fahrzeuge 32 geblendet werden.

An Hand der Daten der Bildverarbeitungseinrichtung 2 ändert die Steuervorrichtung 7 nun die Lichtverteilung des eigenen Fahrzeugs 29 so, dass die Fahrer vorausfahrender bzw. entgegenkommender Fahrzeuge 32, 33 nicht mehr geblendet werden.

In Figur 5B ist ein Beispiel für eine Lichtverteilung 34 der Scheinwerfer des eigenen Fahrzeugs 29, die von der Steuervorrichtung 7 erzeugt wird, wenn von der Bildverarbeitungsvorrichtung 2 ein vorausfahrendes Fahrzeug 33 detektiert wurde. In diesem Fall wird die Leuchtweite insgesamt bei einer Entfernung abgeschnitten, bei welcher sich das vorausfahrende Fahrzeug 33 befindet. Eine solche Lichtverteilung 34 kann mittels Blenden erreicht werden, die bewegbar in einem herkömmlichen Projektionsscheinwerfer angeordnet sind. Alternativ kann der Anstellwinkel des Scheinwerfers über den vorhandenen Stellmotor zur Leuchtweitenverstellung verändert werden. Ferner kann die Lichtverteilung von Scheinwerfern erreicht werden, welche eine Vielzahl von Licht emittierenden Dioden umfassen.

In Figur 5C ist ein weiterentwickeltes Beispiel für die Änderung der Gesamtlichtverteilung gezeigt. In diesem Fall wird von der Steuervorrichtung 7 eine Lichtverteilung 35 erzeugt, die in Richtung eines anderen Fahrzeugs, d. h. im in Figur 5C gezeigten Fall bei dem vorausfahrenden Fahrzeug 33, einen Korridor mit geringerer Leuchtweite bildet, wobei sich das andere Fahrzeug 33 in diesem Korridor befindet. Es wird in diesem Fall somit einerseits verhindert, dass der Fahrer des Fahrzeugs 33 geblendet wird. Andererseits wird jedoch für den Fahrer des Fahrzeugs 29 eine maximale Ausleuchtung des Verkehrsbereichs um das Fahrzeug 33 herum erreicht, da beidseitig zu dem Fahrzeug 33 jeweils ein Bereich mit größerer Leuchtweite bereitgestellt wird. Diese größere Leuchtweite auf den beiden Seiten neben dem Fahrzeug 33 kann insbesondere der Fernlichtfunktion eines herkömmlichen Scheinwerfers entsprechen.

Wird des Weiteren von der Bildverarbeitungsvorrichtung 2 das entgegenkommende Fahrzeug 32 detektiert, kann der Anteil der Lichtverteilung 35, welcher die Gegenfahrbahn ausleuchtet, ähnlich wie bei dem in Figur 5B gezeigten Beispiel bei der Leuchtweite abgeschnitten werden, bei welcher sich das entgegenkommende Fahrzeug 32 befindet.

Die mit Bezug zu den Figuren 5B und 5C beschriebenen Lichtverteilungen 34 und 35 werden in Echtzeit an die sich verändernden Positionen der Fahrzeuge 32 und 33 relativ zu dem eigenen Fahrzeug 29 angepasst, so dass zu jedem Zeitpunkt eine Blendung der Fahrer der Fahrzeuge 32 und 33 verhindert wird, gleichzeitig jedoch eine maximale Ausleuchtung des Verkehrsbereichs vor dem Fahrzeug 29 erreicht wird.

Die Lichtverteilung der Scheinwerferanordnung des Fahrzeugs 29 kann beispielsweise in Richtung der anderen von der Bildverarbeitungsvorrichtung 2 ausgegebenen Positionen dadurch verändert werden, dass die Lage zumindest einer Blendenanordnung in vertikaler Richtung verändert wird und die Emissionsrichtung des Lichtstrahls zumindest eines Scheinwerfers der Scheinwerferanordnung um eine vertikale Achse geschwenkt wird. Die Emissionsrichtungen der Lichtstrahlen beider Scheinwerfer werden insbesondere um eine vertikale Achse auseinander geschwenkt. Ferner kann die Lage zumindest einer Blendenanordnung in vertikaler und horizontaler Richtung verändert werden. In diesem Fall ist es nicht erforderlich, einen Scheinwerfer zu verwenden, dessen Lichtemissionsrichtung um eine vertikale Achse schwenkbar ist. Die Blenden der Blendenanordnung weisen insbesondere jeweils eine Abschattungskante auf, bei welcher der Lichtstrahl des jeweiligen Scheinwerfers abgeschattet wird. Die Abschattungskanten der Blenden können beispielsweise eine Schräge oder eine senkrechte Stufe aufweisen.

**BEZUGSZEICHENLISTE**

| 1 | Sensor |
| 2 | Bildverarbeitungsvorrichtung |
| 3 | Extraktionseinheit |
| 4 | Klassifikator |
| 5 | Konfidenzeinheit |
| 6 | Zuordnungseinheit |
| 7 | Steuervorrichtung |
| 8 | Verstelleinrichtung |
| 9 | Scheinwerfer |

10-17   Verfahrensschritte des ersten Ausführungsbeispiels
18-28   Verfahrensschritte des zweiten Ausführungsbeispiels
29      eigenes Fahrzeugs
30      Abblendlichtverteilung
31      Fernlichtverteilung
32      entgegenkommendes Fahrzeug
33      vorausfahrendes Fahrzeug
34      Lichtverteilung
35      Lichtverteilung

## Patentansprüche

1.  Verfahren zum Detektieren von Fahrzeugen bei Dunkelheit, bei dem

    - ein Bild eines Verkehrsbereichs im sichtbaren Spektralbereich aufgenommen wird,
    - aus dem Bild zusammenhängende Bereiche mit einer Helligkeit extrahiert werden, die einen Schwellwert überschreitet,
    - die Bereiche zumindest in Abhängigkeit von ihrer Größe klassifiziert werden, wobei bei der Klassifikation der Bereiche ein Klassifikationswert aus Eigenschaften des Bereichs gewonnen wird und der Klassifikationswert jedem Bereich zugeordnet wird und wobei die Klassifikationswerte anschließend diskreten gewichteten Klassifikationswerten zugeordnet werden, wobei für die Gewichtung Unterschiede in den Eigenschaften von Fahrzeuglichtern berücksichtigt werden, die von der Größe der Bereiche und/oder davon herrühren, dass die Bereiche von Scheinwerfern oder Rücklichtern herrühren,
    - für jeden Bereich ein Konfidenzwert, der ein Maß für die Ähnlichkeit des Bereichs des Bildes zu einem Fahrzeuglicht darstellt, aus dem gewichteten Klassifikationswert des Bereichs und einer physikalischen Größe, die dem Bereich zugeordnet ist, gebildet wird und
    - in Abhängigkeit von dem Konfidenzwert bestimmt wird, ob ein Bereich einem Fahrzeuglicht zugeordnet wird.

2.  Verfahren nach Anspruch 1,
    **dadurch gekennzeichnet,**
    **dass** die Klassifikationswerte der Bereiche mittels eines Lernalgorithmus' gewonnen werden und anschließend diskreten gewichteten Klassifikationswerten zugeordnet werden und dass der Konfidenzwert aus dem gewichteten Klassifikationswert des Bereichs und der physikalischen Größe gebildet wird.

3.  Verfahren nach Anspruch 1 oder 2,
    **dadurch gekennzeichnet,**
    **dass** die physikalische Größe der maximale Grauwert innerhalb des Bereichs normalisiert über den maximal möglichen Grauwert ist.

4.  Verfahren nach einem der vorhergehenden Ansprüche,
    **dadurch gekennzeichnet,**
    **dass** an Hand der Klassifikation bestimmt wird, ob ein Bereich einem Fahrzeuglicht oder den Lichtern eines Fahrzeugs zugeordnet werden kann, und nur für die Bereiche, denen an Hand der Klassifikation nicht eindeutig ein Fahrzeuglicht zugeordnet werden kann, der Konfidenzwert gebildet wird.

5.  Verfahren nach einem der vorhergehenden Ansprüche,
    **dadurch gekennzeichnet,**
    **dass** die Umgebung der Bereiche untersucht wird, wobei bestimmt wird, ob sich in der Nähe eines Bereichs ein weiterer Bereich befindet, so dass die zwei Bereiche zwei Scheinwerfern oder Rücklichtern eines Fahrzeugs zugeordnet werden können.

6.  Verfahren nach einem der vorhergehenden Ansprüche,
    **dadurch gekennzeichnet,**
    **dass** die zeitliche Kohärenz der Konfidenzwerte bestimmt wird und ein Konfidenzwert in Abhängigkeit von seiner zeitlichen Kohärenz verändert wird.

7.  Verfahren nach Anspruch 6,

**dadurch gekennzeichnet,**
**dass** zur Bestimmung der zeitlichen Kohärenz ein Akkumulationsfeld gebildet wird, bei dem für die Bildpunkte des Bildes der Konfidenzwert aufakkumuliert wird.

8. Verfahren nach Anspruch 6 oder 7,
**dadurch gekennzeichnet,**
**dass** zur Bestimmung der zeitlichen Kohärenz ein Akkumulationsfeld gebildet wird, beim Übergang von einem Bild zu einem folgendem Bild der Konfidenzwert für einen Bildpunkt um einen festen Wert verringert wird und um den Konfidenzwert des entsprechenden Bildpunkts des folgenden Bildes erhöht wird.

9. Verfahren nach einem der Ansprüche 7 oder 8,
**dadurch gekennzeichnet,**
**dass** an Hand der zeitlichen Entwicklung des Akkumulationsfeldes bestimmt wird, ob ein Bereich einem Fahrzeuglicht zugeordnet wird, wobei die Konfidenzwerte des Akkumulationsfeldes einer zeitlichen Hysterese unterworfen sind.

10. Verfahren zum Steuern zumindest eines Scheinwerfers (9) eines Fahrzeugs (29), wobei der Scheinwerfer (9) verschiedene Einstellungen mit unterschiedlichen Leuchtweiten aufweist, bei dem

- nach dem Verfahren nach einem der vorhergehenden Ansprüche andere Fahrzeuge (32, 33) im Verkehrsbereich vor dem Fahrzeug (29) detektiert werden,
- bestimmt wird, ob ein anderes Fahrzeug (32, 33) innerhalb der Leuchtweite des Scheinwerfers (9) liegt, und,
- falls dies der Fall ist, die Einstellung des Scheinwerfers (9) automatisch so verändert wird, dass das andere Fahrzeug (32, 33) nicht mehr innerhalb der Leuchtweite des Scheinwerfers (9) liegt.

11. Vorrichtung zum Detektieren von Fahrzeugen bei Dunkelheit mit

- einem Sensor (1) zum Aufnehmen eines Bildes eines Verkehrsbereichs im sichtbaren Spektralbereich, und
- einer Bildverarbeitungsvorrichtung (2), welche mit dem Sensor (1) gekoppelt ist,
**dadurch gekennzeichnet, dass**
- mit der Bildverarbeitungsvorrichtung (2) aus dem vom Sensor (1) aufgenommenen Bild zusammenhängende Bereiche mit einer Helligkeit extrahierbar sind, die einen Schwellwert überschreitet, und die Bildverarbeitungsvorrichtung (2) umfasst:
- einen Klassifikator (4), mit dem die Bereiche zumindest in Abhängigkeit von ihrer Größe klassifizierbar sind, wobei bei der Klassifikation der Bereiche ein Klassifikationswert aus Eigenschaften des Bereichs gewonnen wird und der Klassifikationswert jedem Bereich zugeordnet wird und wobei die Klassifikationswerte anschließend diskreten gewichteten Klassifikationswerten zugeordnet werden, wobei für die Gewichtung Unterschiede in den Eigenschaften von Fahrzeuglichtern berücksichtigt werden, die von der Größe der Bereiche und/oder davon herrühren, dass die Bereiche von Scheinwerfern oder Rücklichtern herrühren,
- eine Konfidenzeinheit (5), mit welcher für jeden Bereich ein Konfidenzwert, der ein Maß für die Ähnlichkeit des Bereichs des Bildes zu einem Fahrzeuglicht darstellt, aus dem gewichteten Klassifikationswert des Bereichs und einer physikalischen Größe, die dem Bereich zugeordnet ist, berechenbar ist und
- eine Zuordnungseinheit (6), mit der in Abhängigkeit von dem Konfidenzwert bestimmbar ist, ob ein Bereich einem Fahrzeuglicht zugeordnet wird.

12. Vorrichtung nach Anspruch 11,
**dadurch gekennzeichnet, dass**
dass der Sensor (1) einen Bereich aufweist, der nur in dem Wellenlängenbereich empfindlich ist, welcher der Rücklichtfarbe eines Fahrzeugs entspricht, und einen anderen Bereich aufweist, der die Helligkeit des einfallenden Lichts detektiert.

13. Vorrichtung zum Steuern zumindest eines Scheinwerfers (9) eines Fahrzeugs (29), wobei der Scheinwerfer (9) verschiedene Einstellungen mit unterschiedlichen Leuchtweiten aufweist, mit

- einer Vorrichtung zum Detektieren von anderen Fahrzeugen (32, 33) bei Dunkelheit nach einem der Ansprüche 11 oder 12,
- einer Verstelleinrichtung (8) für den Scheinwerfer (9) und
- einer Steuervorrichtung (7), die mit der Detektionsvorrichtung und der Verstelleinrichtung (8) gekoppelt ist und mit der in Abhängigkeit von der Detektion der Detektionsvorrichtung die Einstellung des Scheinwerfers (9) automatisch so veränderbar ist, dass das andere Fahrzeug (32, 33) nicht mehr innerhalb des Lichtkegels des Scheinwerfers (9) liegt.

**Claims**

1. Method for detecting vehicles in the dark, in which

   - an image of a traffic area is recorded in the visible spectral region,
   - continuous regions with a brightness which exceeds a threshold value are extracted from the image,
   - the regions are classified at least as a function of their size, in the classification of the regions a classification value being obtained from properties of the region, and the classification value being assigned to each region, and the classification values subsequently being assigned to discrete weighted classification values, consideration being given for the weighting to differences in the properties of vehicle lights which are derived from the size of the regions and/or from the fact that the regions are derived from headlights or rear lights,
   - there is formed for each region from the weighted classification value of the region and a physical variable which is assigned to the region a confidence value which constitutes a measure of the similarity of the region of the image to a vehicle light, and
   - it is determined as a function of the confidence value whether a region is assigned to a vehicle light.

2. Method according to Claim 1, **characterized in that** the classification values of the regions are obtained by means of a learning algorithm and subsequently assigned to discrete weighted classification values, and **in that** the confidence value is formed from the weighted classification value of the region and the physical variable.

3. Method according to Claim 1 or 2, **characterized in that** the physical variable is the maximum greyscale value within the region normalized over the maximum possible greyscale value.

4. Method according to one of the preceding claims, **characterized in that** it is determined with the aid of the classification whether a region can be assigned to a vehicle light or the lights of a vehicle, and the confidence value is formed only for the regions which cannot be uniquely assigned a vehicle light with the aid of the classification.

5. Method according to one of the preceding claims, **characterized in that** the environment of the regions is examined, it being determined whether a further region is located in the vicinity of a region so that the two regions can be assigned to two headlights or rear lights of a vehicle.

6. Method according to one of the preceding claims, **characterized in that** the temporal coherence of the confidence values is determined, and a confidence value is varied as a function of its temporal coherence.

7. Method according to Claim 6, **characterized in that** in order to determine the temporal coherence an accumulation field is formed in which the confidence value is accumulated for the pixels of the image.

8. Method according to Claim 6 or 7, **characterized in that** in order to determine the temporal coherence an accumulation field is formed, the confidence value for a pixel is reduced by a fixed value upon transition from one image to a following image and is increased by the confidence value of the corresponding pixel of the following image.

9. Method according to either of Claims 7 and 8, **characterized in that** it is determined with the aid of the temporal development of the accumulation field whether a region is assigned to a vehicle light, the confidence values of the accumulation field being subjected to temporal hysteresis.

10. Method for controlling at least one headlight (9) of a vehicle (29), the headlight (9) having various settings with different luminous ranges, in which

    - according to the method according to one of the preceding claims other vehicles (32, 33) are detected in the traffic area in front of the vehicle (29),
    - it is determined whether another vehicle (32, 33) is located within the luminous range of the headlight (9), and
    - if this is the case, the setting of the headlight (9) is varied automatically such that the other vehicle (32, 33) is no longer located within the luminous range of the headlight (9).

**11.** Device for detecting vehicles in the dark, having

- a sensor (1) for recording an image of a traffic area in the visible spectral region, and
- an image processing device (2) which is coupled to the sensor (1),
**characterized in that**
- continuous regions with a brightness which exceeds a threshold value can be extracted with the aid of the image processing device (2) from the image  recorded by the sensor (1), and the image processing device (2) comprises:
- a classifier (4) with the aid of which the regions can be classified at least as a function of their size, in the classification of the regions a classification value being obtained from properties of the region, and the classification value being assigned to each region, and the classification values subsequently being assigned to discrete weighted classification values, consideration being given for the weighting to differences in the properties of vehicle lights which are derived from the size of the regions and/or from the fact that the regions are derived from headlights or rear lights,
- a confidence unit (5) with the aid of which a confidence value which constitutes a measure of the similarity of the region of the image to a vehicle light can be calculated for each region from the weighted classification value of the region and a physical variable which is assigned to the region, and
- an assignment unit (6) with the aid of which it is possible to determine as a function of the confidence value whether a region is assigned to a vehicle light.

**12.** Device according to Claim 11, **characterized in that** the sensor (1) has a region which is sensitive only in the wavelength region which corresponds to the rear light colour of a vehicle, and has another region which detects the brightness of the incident light.

**13.** Device for controlling at least one headlight (9) of a vehicle (29), the headlight (9) having various settings with different luminous ranges, having

- a device for detecting other vehicles (32, 33) in the dark according to one of Claims 11 or 12,
- an adjusting device (8) for the headlight (9) and
- a control device (7) which is coupled to the detection device and the adjusting device (8) and with the aid of which the setting of the headlight (9) can be automatically varied as a function of the detection of the detection device such that the other vehicle (32, 33) is no longer located within the light cone of the headlight (9).

**Revendications**

**1.** Procédé de détection de véhicules dans l'obscurité, dans lequel :

- une image d'une zone de trafic est prise dans la zone spectrale visible ;
- les zones composant l'image présentant une certaine clarté dépassant une valeur seuil sont extraites ;
- les zones sont classées au moins en fonction de leur taille, une valeur de classement composée des propriétés de la zone est récupérée, chaque zone étant associée à la valeur de classement pour le classement des zones et les valeurs de classement étant ensuite associées à des valeurs de classement pondérées discrètes, les différences observées dans les propriétés des phares des véhicules étant prises en compte pour la pondération, ces différences découlant de la taille des zones et/ou découlant du fait que les zones émanent de phares ou de feux arrière;
- une valeur de niveau de confiance représentant une mesure de la similitude de la zone de l'image par rapport à un phare de véhicule étant constituée pour chaque zone à partir de la valeur de classement pondérée de la zone et d'une taille physique associée à la zone ; et
- on définit en fonction de la valeur de niveau de confiance si une zone est associée à un phare de véhicule.

**2.** Procédé selon la revendication 1, **caractérisé en ce que** les valeurs de classement des zones sont récupérées à l'aide d'un algorithme d'apprentissage puis associées à des valeurs de classement pondérées discrètes et que la valeur de niveau de confiance est constituée à partir de la valeur de classement pondérée de la zone et de la taille physique.

**3.** Procédé selon la revendication 1 ou 2, **caractérisé en ce que** la taille physique de la valeur de gris maximale se situe à l'intérieur de la zone normalisée par la valeur de gris maximale possible.

**4.** Procédé selon l'une quelconque des revendications précédentes, **caractérisé en ce que** l'on détermine à l'aide du classement si une zone peut être associée à un phare de véhicule ou aux feux d'un véhicule et que la valeur de niveau de confiance n'est constituée que pour les zones ne pouvant pas être associées de façon univoque à un phare de véhicule à l'aide du classement.

**5.** Procédé selon l'une quelconque des revendications précédentes, **caractérisé en ce que** l'environnement des zones est analysé, permettant ainsi de déterminer si une zone supplémentaire se trouve à proximité d'une zone, de sorte que les deux zones peuvent être associées à deux phares ou deux feux arrière d'un véhicule.

**6.** Procédé selon l'une quelconque des revendications précédentes, **caractérisé en ce que** la cohérence dans le temps des valeurs de niveau de confiance est définie et qu'une valeur de niveau de confiance est modifiée en fonction de sa cohérence dans le temps.

**7.** Procédé selon la revendication 6, **caractérisé en ce que** pour déterminer la cohérence dans le temps, un champ de cumul est constitué dans lequel la valeur de niveau de confiance est cumulée pour les points d'image de l'image.

**8.** Procédé selon la revendication 6 ou 7, **caractérisé en ce que** pour déterminer la cohérence dans le temps, un champ de cumul est constitué, la valeur de niveau de confiance est réduite d'une valeur fixe pour un point d'image lors de la transition d'une image à une image suivante et est augmentée de la valeur de niveau de confiance du point d'image correspondant de l'image suivante.

**9.** Procédé selon l'une quelconque des revendications 7 ou 8, **caractérisé en ce qu'**on détermine à l'aide du déroulement dans le temps du champ de cumul si une zone est associée à un phare de véhicule, les valeurs de niveau de confiance du champ de cumul étant soumise à une hystérèse temporelle.

**10.** Procédé de commande d'au moins un phare (9) d'un véhicule (29), le phare (9) comportant différents réglages avec différentes largeurs d'éclairage, dans lequel

- selon le procédé selon l'une quelconque des revendications précédentes, les autres véhicules (32, 33) se trouvant devant le véhicule (29) dans la zone de trafic sont détectés;
- l'on détermine si un autre véhicule (32, 33) se trouve à l'intérieur de la largeur d'éclairage du phare (9) ; et

si c'est le cas, le réglage du phare (9) est automatiquement modifié de telle sorte que l'autre véhicule (32, 33) ne se trouve plus à l'intérieur de la largeur d'éclairage du phare (9).

**11.** Dispositif de détection de véhicules dans l'obscurité à l'aide :

- d'un capteur (1) permettant de prendre une image d'une zone de trafic dans la zone spectrale visible ; et
- d'un dispositif de traitement d'image (2) couplé au capteur (1) ;
**caractérisé en ce que** :
- les zones composant l'image prise par le capteur (1) avec une clarté dépassant une valeur seuil sont extraites à l'aide du dispositif de traitement d'image (2) et le dispositif de traitement d'image (2) comprend :
- un système de classement (4) à l'aide duquel les zones sont classées au moins en fonction de leur taille, une valeur de classement étant récupérée à partir des propriétés de la zone pour le classement des zones et la valeur de classement étant associée à chaque zone et les valeurs de classement étant ensuite associées à des valeurs de classement pondérées discrètes, les différences observées dans les propriétés des phares des véhicules étant prises en compte pour la pondération, lesdites différences découlant de la taille des zones et/ou découlant du fait que les zones émanent de phares ou de feux arrière ;
- une unité de détermination de niveau de confiance (5) à l'aide de laquelle on peut calculer pour chaque zone une valeur de niveau de confiance représentant une mesure de la similitude de la zone de l'image avec un phare de véhicule, à partir de la valeur de classement pondérée de la zone et d'une taille physique associée à la zone ; et
- une unité d'association (6) permettant de définir si une zone est associée à un phare de véhicule en fonction de la valeur de niveau de confiance.

**12.** Dispositif selon la revendication 11, **caractérisé en ce que** le capteur (1) comporte une zone uniquement sensible dans la plage des longueurs d'onde correspondant à la couleur de feu arrière d'un véhicule et comporte une autre zone détectant la clarté de la lumière incidente.

**13.** Dispositif de commande d'au moins un phare (9) d'un véhicule (29), le phare (9) comportant différents réglages avec différentes largeurs d'éclairage, avec :

- un dispositif de détection d'autres véhicules (32, 33) dans l'obscurité selon l'une quelconque des revendications 11 ou 12 ;
- un dispositif de réglage (8) prévu pour le phare (9) ; et
- un dispositif de commande (7) couplé au dispositif de détection et au dispositif de réglage (8) et pouvant être modifié automatiquement et permettant de réaliser le réglage du phare (9) en fonction de la détection du dispositif de détection de telle sorte que l'autre véhicule (32, 33) ne se trouve plus à l'intérieur du cône lumineux du phare (9).

FIG. 1

FIG. 2

FIG. 3

FIG. 4

FIG. 5A

FIG. 5B

FIG. 5C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6611610 B1
- US 20040143380 A1
- EP 1837803 A2
- WO 2008037388 A2

**In der Beschreibung aufgeführte Nicht-Patentliteratur**

- **R. SCHAPIRE ; Y. SINGER.** Improved boosting using confidence-rated predictions. *Machine Learning,* 1999, vol. 37 (3), 297-336